# EUROPEAN PATENT APPLICATION

(11) **EP 4 407 074 A1**
(43) Date of publication of application: **31.07.2024**
(21) Application number: 22871391.3
(22) Date of filing: 27.04.2022
(51) Int. Cl.: C25D 21/00, C25B 1/01, H01M 8/18, C25D 3/56

(54) **METHOD FOR PURIFYING IRON-CHROMIUM ELECTROLYTE, AND IRON-CHROMIUM ELECTROLYTE THEREBY OBTAINED**

(30) Priority: 26.09.2021 CN 202111125169
(71) Applicant: EnerFlow Technology Co., Ltd., Weifang, Shandong 261000 (CN)
(72) Inventor: WANG, Jin, Weifang, Shandong 261000 (CN); ZU, Ge, Weifang, Shandong 261000 (CN); ZHENG, Xiaohao, Weifang, Shandong 261000 (CN)
(74) Representative: Perani & Partners S.p.A.
(86) International application number: PCT/CN2022/089603
(87) International publication number: WO 2023/045328

(57) **Abstract**

The present disclosure relates to a method for purifying an iron-chromium electrolyte, and the iron-chromium electrolyte thereby obtained. The method for purifying the flow battery electrolyte according to the present disclosure can simply and effectively remove harmful metal ions, avoids hydrogen evolution side-reactions, significantly reduces the production cost of the electrolyte and has high practical application value.

## Description

### TECHNICAL FIELD

The present disclosure relates to a method for purifying a flow battery electrolyte, in particular a method for purifying iron-chromium electrolyte, and an iron-chromium electrolyte thereby obtained.

### BACKGROUND

The flow battery technology has a natural advantage of large-scale energy storage: the capacity of energy storage is linearly proportional to the volume of electrolyte; and the charging and discharging powers depend on the size and the number of piles; it is therefore possible to design flow batteries with charging and discharging powers from kW to MW levels and with energy storage capacities that can be continuously discharged for 1 hour to several days according to the demands. Based on common inorganic acids, electrolytes of inorganic salts are chemically stable and convenient for storage, have little impact on the environment and extremely low self-discharge coefficient, and are suitable for long-term electric power storage. Since the reaction condition of batteries is normal temperature and normal pressure and the flowing process of electrolyte is a natural water-based circulating heat dissipation system, the electrolytes have very high safety and significantly lower influence of incidents than other large-scale energy storage schemes. Due to its stable and reliable charging-discharging cycle, there is no upper limit of the theoretical numbers of charging and discharging cycles.

Among the flow batteries, iron-chromium flow batteries have been paid attention because of abundant iron and chromium resources, low costs, numbers of cycles, long service life, low toxicity and erosion, easy modularized design, and so on.

According to the working principle of flow batteries, during charging a battery, the electrical energy is converted into chemical energy via the pile, and the chemical energy is stored in the electrolyte. In order to reduce the costs, it is desirable to use low-cost raw materials at industrial purity. However, some of metal ion impurities such as argentum, aurum, platinum, nickel, and copper contained in an electrolyte produced from raw materials at industrial purity will cause, during charging and discharging, side-reactions in the flow battery, such as hydrogen evolution reactions, which produce a large amount of dangerous gas and cause the electrolyte to lose effect quickly.

Moreover, although various methods are used to produce the electrolyte of iron-chromium flow batteries for various purposes, hydrogen evolution still occurs over time in actual use of the electrolyte due to the entry of other metal ion impurities from the raw materials or from the process processing.

### SUMMARY

### Problem to be solved

In the long-term practice of the inventor, it is found that on the one hand, although various methods have been tried for preparing electrolytes, metal ion impurities mainly from the raw materials are inevitable; on the other hand, although purification methods have been tried, due to the complicated composition of iron-chromium flow battery electrolytes, and the metal ions as impurities have various forms of existence, conventional ion separation methods are of low efficiency and would cause unnecessary loss of a large amount of iron and chromium ions.

Further, it is known that the inventor of the present disclosure has investigated the purification of all vanadium flow battery electrolytes (see CN110858655A) and proposed a method for purifying vanadium flow battery electrolytes containing impurity metal ions such as argentum, aurum, platinum, nickel, copper, etc. that are difficult to remove, by using metallic mercury as the cathode, so that a total content of the metal ion impurities in the vanadium electrolyte is about 10 ppm, even about 1 ppm, thereby obtaining a highly purified vanadium electrolyte and greatly reducing the hydrogen evolution side-reaction in vanadium flow batteries.

Based on the above, the inventor expected that metal ion impurities can be removed from electrolytes by using the above purification method in the case of an iron-chromium flow battery. However, it was confusingly found that, even though the potentials of the electrodes were adjusted, a substantially equivalent purification method is adopted, and substantially the same purification effect is obtained, the resulted electrolyte would still have the hydrogen evolution side-reaction in actual use.

The applicant assumed that this may be caused by some characteristics of iron-chromium flow batteries. For example, the small amount of impurity metal may also lead to a change in the hydrogen-evolution potential during the cycle of the iron-chromium flow battery. Under this assumption, there are further problems:
i) How to determine which of the metallic impurities contribute to hydrogen evolution phenomenon during the operation of the iron-chromium flow battery;
ii) To what extent the content of these ions can be reduced to avoid occurrence of hydrogen evolution phenomenon and Fe and Cr will not precipitated in the form of metal during purification.

In view of the foregoing, the technical problem to be solved by the present disclosure is how to determine a degree of purification of impurity metal ions in an iron-chromium electrolyte to prevent occurrence of hydrogen evolution phenomenon during the operation of an iron-chromium flow battery, while ensuring not to cause loss of Fe and Cr ions during the purification process.

### Solution to the problems

It would be difficult to remove metallic impurity ions at a concentration as low as about 1 ppm by a conventional purification method. Therefore, the presence of impurity ions at an extremely low concentration would become an enormous barrier restricting the practical application of iron-chromium flow batteries.

Through research, the applicant found that the hydrogen evolution side-reaction still occurs in an iron-chromium flow battery when the total concentration of impurity metal ions is reduced to about 1 ppm, mainly because the standard reduction electrode potentials of iron and chromium (the standard reduction electrode potentials of Fe²⁺ and Cr²⁺ are -0.44 v and -0.91 v, respectively) are closer to that of hydrogen than that of vanadium (the standard reduction electrode potential of V²⁺ is about -1.13 v), so the problems eliminated in vanadium flow batteries by the afore-mentioned purification method still occurs in iron-chromium flow batteries.

In addition, the standard reduction electrode potentials of impurity metal ions such as Ag ions, Pt ions, Cu ions, and Ni ions have relatively great differences from that of vanadium; thus, it is easier for the impurity metal ions to precipitate in a vanadium electrolyte without causing the loss of vanadium ions. The case in an iron-chromium flow battery is different. For one thing, the presence of these ions contributes to hydrogen evolution during the operation of the iron-chromium flow battery (affects the hydrogen-evolution potential). For another, the standard reduction electrode potentials of the impurity metal ions have relatively small differences from those of iron and chromium; as a result, if the purification effect is pursued blindly during electrolyte purification for an iron-chromium flow battery, precipitation of iron and chromium metal ions may occur when the purification has been carried out to a certain degree (low impurity degree and iron and chromium loss are associated phenomena that occur simultaneously).

Despite of the above various problems, the inventor of the present application continued the research of the method for purifying the electrolyte of iron-chromium flow batteries, and found that by using a cathode comprising mercury and porous conductive materials, when the total concentration of impurity metal ions such as Ag ions, Pt ions, Cu ions, Ni ions in the iron-chromium electrolyte is purified to 100 ppb or less (i.e., 0.1 ppm or less), the occurrence hydrogen evolution phenomenon would be significantly improved in the flow battery after purification, without causing loss of iron and chromium ions.

Specifically, the present disclosure firstly provides a purification method of an iron-chromium electrolyte, comprising the following steps:
a step of providing an electrolytic cell having an anode, an anolyte, a cathode, and a separator;
a step of passing an iron-chromium electrolyte to be purified through the cathode surface;
wherein the cathode comprises metallic mercury and a porous conductive material, and when the iron-chromium electrolyte to be purified passes through the cathode surface, the iron-chromium electrolyte to be purified undergoes a reduction reaction at least in a partial cathode surface area by an action of an external current,
wherein the iron-chromium electrolyte to be purified comprises Fe ions, Cr ions, and impurity metal ions, wherein the impurity metal ions include one or more of Ag ions, Pt ions, Cu ions, and Ni ions,
wherein a total concentration of impurity metal ions after purification is 100 ppb or less.

The purification method according to the above, wherein the impurity metal ions further include one or more of Au ions, Bi ions, Sn ions, and Pd ions.

The above purification method according to the above, wherein a space is formed between the cathode and the separator so as to allow the iron-chromium electrolyte to be purified to pass through.

The above purification method according to the above, wherein the anode is an anode comprising a carbon-based material; the porous conductive material of the cathode is a porous carbon material.

The above purification method according to the above, wherein the anode is a graphite sheet and/or graphite felt.

The above purification method according to the above, wherein the cathode is taken out when the purification is carried out to an arbitrary extent, and metallic mercury is purified and recovered by distillation and is recycled as cathode material.

The above purification method according to the above, wherein when the purification is completed, the cathode is taken out, and metallic mercury is purified and recovered by distillation and is recycled as cathode material.

The above purification method according to the above, wherein the anolyte comprises at least Fe²⁺ ions and/or Cr²⁺ ions.

Further, the present disclosure also provides an iron-chromium electrolyte for a flow battery, which is obtained by the afore-described purification method.

Further, the present disclosure also provides a purification device of an iron-chromium electrolyte, comprising: an electrolytic cell and a cathode substance inlet/outlet port,
wherein the electrolytic cell comprises an anode, an anolyte, a cathode, and a separator, the cathode comprises metallic mercury and a porous conductive material, and a space is formed between the cathode surface and the separator, the space is able to accommodate an iron-chromium electrolyte to be purified or allows an iron-chromium electrolyte to be purified to pass through.

The afore-described purification device according to the above, wherein the purification device can be connected with a device for preparing the iron-chromium electrolyte to be purified.

### Effect of the disclosure

The method for purifying a flow battery electrolyte according to the present disclosure can achieve the following technical effects:
(1) The method for purifying an electrolyte according to the present disclosure is an electrochemical method which can simply and effectively remove harmful impurity metal ions while reduce the costs, thereby ensuring the purity of the electrolyte and preventing adverse side-reactions;
(2) The purification method according to the present disclosure greatly extends the selection range of initial raw materials, which is of great significance in practical application for reducing the costs of the overall battery system and increasing the life span of the electrolyte;
(3) According to the present disclosure, liquid metallic mercury and a porous conductive material are used as electrolysis electrodes; impurity metal ions in the flow battery electrolyte to be purified form amalgam with the metallic mercury during electrolysis, thereby allowing recovery of metallic mercury by distillation in subsequent treatment of the mixture of metallic mercury and amalgams. The recovered metallic mercury can be returned to the cathode of the purification device of the present disclosure for reuse. As such, reuse of the metallic mercury of the cathode is achieved by such method, and the recycling of metallic mercury is simple and easy to operate.
(4) The porous conductive material in the cathode is capable of increasing the specific surface area of the electrode, making it possible to effectively purifying the metallic impurity ions to an extremely low level.

### DETAILED DESCRIPTION

### <First Embodiment>

A first embodiment of the present disclosure provides a method for purifying an iron-chromium electrolyte for a flow battery, comprising the following steps:
a step of providing an electrolytic cell having an anode, an anolyte, a cathode, and a separator;
a step of passing an iron-chromium electrolyte to be purified through a cathode surface;
wherein the cathode comprises metallic mercury and a porous conductive material, and when the iron-chromium electrolyte to be purified passes through the cathode surface, the iron-chromium electrolyte to be purified undergoes a reduction reaction at least in a partial cathode surface area by an action of an external current.

### Anode and Anolyte

In one embodiment of the present disclosure, the anode comprises an anode material. The anode material may comprise a carbon-based material with a porous structure. The pores are capable of forming a communicated structure that accommodates the electrolyte or allows the flow of the electrolyte. The porous structure may be formed by a foaming method or by a weaving or non-weaving method. The non-weaving method may be performed by, for example, superimposing and compressing carbon-based fibrous filaments, or by processing fibrous filaments formed by an electrostatic spinning process, to obtain a porous fiber aggregate with a certain shape. Typically, the anode material of the present disclosure may be selected from carbon felt, carbon paper, carbon fiber, graphite sheet, graphite felt, and the like, and is preferably graphite sheet and/or graphite felt.

The anolyte is not particularly limited herein as long as it can lose electrons and undergo oxidation reaction. Since an iron-chromium electrolyte is purified according to the present disclosure, the anolyte of the present disclosure is preferably an electrolyte comprising at least Fe²⁺ ions and/or Cr²⁺ ions. For example, the electrolyte may be an electrolyte comprising Fe²⁺ ions and Cr²⁺ ions, an electrolyte comprising Fe²⁺ ions and Cr³⁺ ions, an electrolyte comprising Fe³⁺ ions and Cr²⁺ ions, or the like.

The electrolyte is a diluted acid solution. The acid may be selected from a sulfuric acid or a hydrochloric acid. The preparation method of the anolyte is not particularly limited herein; the anolyte may be prepared by a conventional method in the art.

During the electrolysis, on the surface of the anode material, Fe²⁺ ions and/or Cr²⁺ ions in the anolyte lose electrons and oxidized into Fe³⁺ ions and/or Cr³⁺ ions.

### Separator

The separator adapted for use in the present disclosure allows an ionic substance to pass through. A suitable material for the separator comprises a polymeric separator or a composite separator comprising a polymer and an inorganic substance. In some embodiments, the separator may comprise a woven or non-woven plastic sheet, which has an active ion-exchange material such as a resin or a functionality embedded by a heterogeneous method (e.g., co-extrusion) or a homogeneous method (e.g., radiation grafting). In some embodiments, the separator may have a high current efficiency Ev and a high coulombic efficiency E_{I}, and may be designed as a porous separator that restricts mass transfer therethrough to a minimum while still facilitating ion transfer. In some embodiments, the separator may be made from a polyolefin material or a fluorinated polymer, and may have designated thickness and pore diameter. In some embodiments, the separator may be a proton exchange separator, an anion-exchange separator, a cation-exchange separator, etc. For example, a NAFION-117 separator purchased from DuPont, Co. may be used. One manufacturer capable of producing these separator or other separators consistent with those used in the disclosed embodiments is Daramic Microporous Products, L.P., N. Community House Rd., Suite35, Charlotte, NC28277. In some embodiments, the separator may be a non-selective microporous plastic separator, also produced by Daramic Microporous Products L.P.

### Cathode and electrolyte to be purified

The present disclosure uses liquid metallic mercury and a porous conductive material as the cathode. Moreover, a space is formed between the separator and the cathode. The iron-chromium electrolyte to be purified is allowed to pass through the space.

According to the present disclosure, the porous conductive material of the cathode comprises a porous carbon material such as graphite felt. By combining the porous conductive material with mercury, the specific surface area of the electrode can be increased. For example, in a case where graphite felt and mercury electrodes are combined, the specific surface area of the electrodes may have an increase of 20%-50% as compared with a case in which the only the same amount of mercury is used.

For the electrolyte to be purified of the present application, an iron-chromium electrolyte that has not been purified at all may be used; or an iron-chromium electrolyte that has been purified to remove or partially remove elements such as Al, K, Na, and so on may be used. The above iron-chromium electrolyte to be purified contains metal elements that are difficult to remove by a conventional purification method, in particular noble metal elements. Meanwhile, the purification method of the present disclosure is not limited to remove noble metal elements; any metal ions that have a reduction potential that is higher than that of hydrogen evolution and can form an amalgam with mercury can be removed by the method of the present disclosure.

Specifically, the electrolyte to be purified according to the present disclosure may comprise Fe ions, Cr ions, and impurity metal ions. In some embodiments of the present disclosure, the impurity metal ions comprise one or more of Ag ions, Pt ions, Cu ions, and Ni ions.

In some other embodiments of the present disclosure, beside the afore-mentioned impurity ions, the impurity metal ions also include one or more of Au ions, Bi ions, Sn ions, and Pd ions.

In the iron-chromium electrolyte to be purified according to the present disclosure, the total concentration of impurity metal ions is 20 ppm or less, preferably 10 ppm or less, more preferably 5 ppm or less, more preferably 3 ppm or less, most preferably about 1 ppm.

For the anolyte, as described above, the anolyte according to the present disclosure is preferably an iron-chromium electrolyte comprising Fe²⁺ ions and/or Cr²⁺ ion. The electrolyte is a diluted acid solution. The acid may be selected from a sulfuric acid or a hydrochloric acid. The preparation method of the anolyte is not particularly limited herein; the anolyte may be prepared by a conventional method in the art.

### Purification method

During the electrolysis, the iron-chromium electrolyte to be purified flows through the surface of the metallic mercury. By an action of an external current, the metallic impurity ions are reduced into metal elements on the mercury electrode surface. Further, these metal elements are alloyed with metallic mercury to form amalgams. When the electrolysis is carried out to a certain extent, the mixture of metallic mercury and amalgams in the cathode are discharged.

The discharged mixture is subjected to distillation. The metallic mercury that is not formed into amalgams is purified and recovered; the amalgams are recovered after concentration and purification. Further, the recovered metallic mercury is returned to the cathode to be reused.

The iron-chromium electrolyte to be purified flows in the space formed by the separator and the metallic mercury to complete the above reaction. In some preferable embodiments of the present disclosure, metallic mercury and the porous conductive material are used in combination. Preferably, in order to increase the contact area between metallic mercury and the electrolyte to be purified, the cathode may be arranged in multiple layers.

The method for preparing the electrolyte to be purified is not particularly limited herein and may use a conventional method in the art, as long as electrolyte to be purified contains Fe²⁺ ions and Cr²⁺ ions. For example, the electrolyte to be purified may be prepared by dissolving a low-purity ferrous chloride and chromium chloride raw materials containing impurity metal ions in a diluted acid solution.

In a specific operation, a mixing tank containing a hydrochloric acid solution containing either or both of Fe²⁺ ions and Cr²⁺ (i.e., the electrolyte to be purified) is used as the container for containing the electrolyte to be purified of the present disclosure, so that the produced electrolyte is purified directly by the purification device of the present disclosure. As such, a high-purity electrolyte can be obtained at one time from low-cost and low-purity raw materials by a simple operation.

During purification, the anode and the cathode are respectively connected to the positive and negative electrodes of the power source to charge the electrolyte. Thus, ions in the anolyte such as Fe²⁺ ions and/or Cr²⁺ ions undergo oxidization reactions on the surface of the anode and produce Fe³⁺ and/or Cr³⁺ ions. The reaction formula is as below:

Anode reaction: Fe^{2+.}-e⁻→Fe^{3+.}

Cr^{2+.}-e⁻→Cr³⁺.

Meanwhile, the impurity metal ions in the electrolyte to be purified undergo reduction reactions in at least a partial cathode surface area to form metals. The reaction formula is as below:

Cathode reaction: Mⁿ⁺ne⁻→M.,

In the above formula, n is 1 or 2.

In addition, although the reaction formula not shown, Fe³⁺ and Cr³⁺ ions in the iron-chromium electrolyte to be purified also undergo the reaction at the cathode and produce Fe²⁺ and Cr²⁺. Therefore, it is necessary to control the reduction potential of the metal ions to be higher than that of Cr²⁺ and Fe²⁺, so that Cr and Fe are not precipitated. Furthermore, the reduction potentials of the metal ions need to be controlled to be higher than the hydrogen evolution potential so that hydrogen gas is not produced during the reduction. An advantage of the mercury electrode is that it greatly reduces the hydrogen evolution potential, which makes it difficult to generate hydrogen gas, so that some metals that cannot be easily reduced could form amalgams and be removed.

As described above, during the purification, the metal ions in the electrolyte to be purified form metals by a reduction reaction on the surface of the mercury electrode and the metals are formed into amalgams with the metallic mercury of the cathode, such that the metal ions are removed from the electrolyte to be purified.

The total concentration of the metallic impurity ions in the purified electrolyte may be controlled in view of the actual needs, and is usually 100 ppb or less, preferably 80ppb or less, more preferably 50 ppb or less, more preferably 40 ppb or less.

From the above description of the method for purifying an electrolyte, the purification method of the present disclosure enables selective removal of harmful metal ions in a simple and effective manner, thereby greatly reducing the costs for electrolyte production and extending the selection range of initial raw materials.

### <Second Embodiment>

The second embodiment of the present disclosure relates to a device for purifying an iron-chromium electrolyte, comprising the following structure:
an electrolytic cell;
a cathode substance inlet/outlet port,
wherein the electrolytic cell comprises a anode, a cathode, and a separator,
the cathode comprises a metallic mercury and a porous conductive material, and
a space is formed between the cathode surface and the separator, the space is able to accommodate an iron-chromium electrolyte to be purified or allows an iron-chromium electrolyte to be purified to pass through.

The electrolytic cell is divided into an anode portion and a cathode portion by the separator. The anode portion comprises an anode material. The anode material is the same with the anode material used in the first embodiment of the present disclosure.

The cathode portion comprises the cathode and the space formed between the separator and the cathode. The separator and the cathode are the same with those used in the first embodiment of the present disclosure. The space formed between the separator and the cathode is not particularly limited as long as it provides a flow channel for the electrolyte to be purified and allows the metal ions therein to undergo reduction reactions.

In a preferable embodiment of the present disclosure, the cathode is provided as a multilayer cathode such that an increased amount of electrolyte to be purified passes the cathode surface in unit time, thereby improving the purification efficiency.

The cathode portion of the device for purifying electrolyte provided by the present disclosure comprises an inlet port and an outlet port for a cathode substance. Preferably, the outlet port is provided at the lowermost of the cathode portion, and the inlet port is disposed higher than the position of the outlet port. After the purification has been carried out for a certain time, the cathode containing amalgams need to be treated. The cathode substance may be discharged conveniently through the outlet port. Then, the discharged cathode substance enters the distillation apparatus.

The distillation apparatus is not particularly limited and may use a conventional apparatus for distillation of metallic mercury in the art. The distillated metallic mercury was recovered or directly returned to the afore-described device for purifying flow battery electrolyte via a pipeline and the inlet port. This operation realizes recycling and reuse of metallic mercury, facilitating increasing the efficiency of the entire process.

In the purification device of the present disclosure, the electrolytic cell comprises the anode on an upper side, the cathode on a lower side, the separator interposed between the anode and the cathode, and the space between the cathode surface and the separator.

The purification device of the present disclosure further comprises a power source, for example a direct-current voltage-stabilized power source, wherein the anode and the cathode are connected with the positive electrode and the negative electrode of the power source, respectively; a container for containing the anolyte; a container for containing the catholyte (i.e., the electrolyte to be purified); a container for containing metallic mercury and the porous conductive material; a circulation pump connected with the anolyte and the catholyte, etc.

In the embodiment of the present disclosure, the cathode is a cavity. During purifying the electrolyte, the metallic mercury and the porous conductive material are introduced from the inlet/outlet port as the cathode. The cathode and the anode are separated by the separator.

In the embodiment of the present disclosure, the anolyte is the same as described in the first embodiment of the present disclosure.

In the embodiment of the present disclosure, the electrolyte to be purified is used as the catholyte. The electrolyte to be purified is the same as described in the first embodiment of the present disclosure.

In purifying the electrolyte, the anolyte as described above can flow through the anode in a controlled manner by a circulating pump. For example, the flow rate may be controlled at 0.1-10 L/min. The porous passages in communication with each other in the anode material provide a flowing space for the flow. The porous arrangement provides a greater reaction surface area such that the electrolyte and the anode material have as great a reaction surface as possible.

While the anolyte flows through the anode in a controllable manner, the electrolyte to be purified as the catholyte is passed through the space between the separator and the cathode surface in a controllable manner by the circulation pump from the container containing the electrolyte to be purified containing the impurity metal ions. The flow rate of the electrolyte to be purified may be controlled at 0.1-10 L/min. From the perspective of sufficient removal of metallic impurity ions, the flow rate is preferably 0.1-5 L/min, more preferably 0.5-1 L/min.

Then, the power source is connected, wherein the anode and the cathode are connected with the positive electrode and the negative electrode of the power source, respectively, to charge the electrolyte, thereby purifying the electrolyte.

During the purification of the electrolyte, based on the specific electrode area, the current may be controlled at dozens to hundreds amperes, and the voltage may be controlled at 1.5-2 V.

In order to remove the metallic impurity ions at extremely low concentration, an improved measure is taken, i.e., increasing the specific surface area of the electrode. For example, graphite felt can be combined with the mercury electrode and the surface area of the electrode can be increased by 20%-50% by using the surface porous structure of the graphite felt, as compared with the case of only a mercury electrode.

When the purification has been completed, that is, the content of impurity ions satisfies the requirements, or when the purification has been carried out to an arbitrary extent, the metallic mercury may be taken out from the inlet/outlet port, and distillated to be separated as pure mercury and metallic residue. The obtained pure mercury may be reused as the cathode material. The distillation may be implemented by a general distillation operation.

In addition, the purification may be performed once or multiple times as needed until the contents of metallic impurity ions in the electrolyte meets the requirements. When there is a need for purification for multiple times, the electrolyte to be purified may be circulated through the space between the separator and the cathode surface by the circulation pump.

An important feature of the purification device of the present disclosure is that it can be connected with an additional device for preparing the electrolyte to be purified and the electrolyte prepared by the device for preparing the electrolyte is used as the catholyte of the present disclosure, thereby producing a high-purity electrolyte from low-purity raw materials at a one-time.

### Examples

The embodiments of the present disclosure will be described in details below with reference to examples. However, those skilled in the art will understand that the subsequently described examples are merely for explaining the present disclosure and should not be considered to limit the scope of the present disclosure. Where the specific conditions are not specified in examples, it is carried out under conventional conditions or under conditions recommended by the manufacturer. Where the producer is not indicated for a reagent or instrument, the reagent or instrument is a conventional product available on the market.

### Comparative Example 1

Ferrous chloride and chromium chloride at industrial purity were dissolved in a diluted hydrochloric acid solution to prepare 2.5 mol/L iron-chromium electrolyte. Then, 100 L of the 2.5 mol/L iron-chromium electrolyte was introduced at a flow rate of 5 L/min to flow through the anode of the electrolytic cell consisted of a graphite felt and a graphite bipolar plate. 100 L of the 2.5 mol/L iron-chromium electrolyte was introduced at a flow rate of 5 L/min to flow through the cathode of the electrolytic cell consisting of a cavity and metallic mercury. The cathode had an electrode surface of 800 cm². The iron-chromium electrolyte contained the following contents of metal ion impurities: Cu: 10 ppm, Ni: 50 ppm, Pt: 5 ppm, Au: 500 ppb, and Ag: 800 ppb.

A current of 40 mA/cm² was applied to the electrolytic cell such that the oxidation reaction of Fe²⁺ and Cr²⁺ in the anode and the reduction reaction of the impurity metal ions of the cathode occurred. The electrolyte of the anode and the cathode is circulated through the electrolytic cell for five times to realize the objective of removing impurity metal ions to the maximum extent.

The purified catholyte contained the following contents of ion impurities: Cu: 300 ppb, Ni: 600 ppb, Pt: 30 ppb, Au: 10 ppb, Ag: 20 ppb, totaling 955 ppb, i.e., 0.960 ppm, which is about 1 ppm.

The purified electrolyte was loaded into a flow battery single cell for charging and discharging cycle. The flow battery single cell had a conventional reaction area of 25 cm² and had a liquid storage bottle of 150 ml at each of the positive and the negative electrode

The battery was charged and discharged continuously, and the hydrogen produced at the negative electrode was collected using a gas measuring bottle. The battery was subject to a total of 600 hours of uninterrupted charging and discharging. A total of 1679 ml gas was produced at the negative electrode. The discharge capacity was reduced by 54%.

### Example 1

In addition to introducing graphite felt to cathode, increasing the electrode surface of the cathode to 1100 cm², and changing the flow rate of the iron-chromium electrolyte to 1 L/min, the same purification device and method are used as in those in Comparative Example 1 to perform further purification of the iron-chromium catholyte that has been purified in Comparative Example 1.

The further purified iron-chromium electrolyte contained the following contents of metal ion impurities: Cu: 10 ppb, Ni: 15 ppb, Pt: 3 ppb, Au: 0, Ag: 8 ppb, totaling 36 ppb.

After being purified with the purification device, the iron-chromium electrolyte was loaded into a flow battery cell for charging and discharging cycle. The flow battery single cell had a conventional reaction area of 25 cm² and had a liquid storage bottle of 150 ml at each of the positive and the negative electrodes.

The battery was charged and discharged continuously, and the hydrogen produced at the negative electrode was collected using a gas measuring bottle. The battery was subject to a total of 600 hours of uninterrupted charging and discharging. A total of 12 ml gas was produced at the negative electrode. The discharge capacity was reduced by 1%.

Through comparison between Example 1 and Comparative Example 1, it can be seen that after purification by the purification method of the present disclosure, gas produced at the negative electrode was significantly reduced, from 1679 ml to 12 ml; and the discharge capacity was greatly improved. Furthermore, Fe and/or Cr were not detected by detecting the purified mercury cathode.

The afore-described embodiments of the present disclosure are illustrative and are for the purpose of teaching a person skilled in the art to implement the general method of the present disclosure. Without departing from the spirit and scope of the claims of the present disclosure, elements, materials, and the like described herein may be modified. Therefore, further variants of the embodiment of the present disclosure are obvious to a person skilled in the art after considering this specification.

## Claims

1. A purification method for an iron-chromium electrolyte for a flow battery, comprising the following steps:
a step of providing an electrolytic cell having an anode, an anolyte, a cathode, and a separator;
a step of passing an iron-chromium electrolyte to be purified through the cathode surface;
wherein the cathode comprises metallic mercury and a porous conductive material, and when the iron-chromium electrolyte to be purified passes through the cathode surface, the iron-chromium electrolyte to be purified undergoes a reduction reaction at least in a partial cathode surface area by an action of an external current,
wherein the iron-chromium electrolyte to be purified comprises Fe ions, Cr ions, and impurity metal ions, wherein the impurity metal ions comprises one or more of Ag ions, Pt ions, Cu ions, and Ni ions,
wherein a total concentration of impurity metal ions after purification is 100 ppb or less.

2. The purification method according to claim 1, wherein the impurity metal ions further include one or more of Au ions, Bi ions, Sn ions, and Pd ions.

3. The purification method according to claim 1 or 2, wherein a space is formed between the cathode and the separator so as to allow the iron-chromium electrolyte to be purified to pass through.

4. The purification method according to claim 1 or 2, wherein the anode is an anode comprising a carbon-based material and the porous conductive material of the cathode is a porous carbon material.

5. The purification method according to claim 4, wherein the anode is a graphite sheet and/or graphite felt.

6. The purification method according to claim 1 or 2, wherein the cathode is taken out when the purification is carried out to an arbitrary extent, and the metallic mercury is purified and recovered by distillation and is recycled as cathode material.

7. The purification method according to claim 1 or 2, wherein the cathode is taken out when the purification is completed, and the metallic mercury is purified and recovered by distillation and is recycled as cathode material.

8. The purification method according to claim 1 or 2, wherein the anolyte comprises at least Fe²⁺ ions and/or Cr²⁺ ions.

9. An iron-chromium electrolyte for flow battery, which is obtained by the purification method according to any one of claims 1 to 8.
